# EUROPEAN PATENT SPECIFICATION

(11) **EP 3 574 066 B1**
(45) Date of publication and mention of the grant of the patent: **04.03.2026**
(21) Application number: 18700880.0
(22) Date of filing: 11.01.2018
(51) Int. Cl.: C11C 1/00, C11C 1/10, A23K 20/158, A23K 20/24

(54) **PROCESS FOR THE PREPARATION OF FATTY ACID PRODUCTS FOR ANIMAL FEED**
VERFAHREN ZUR HERSTELLUNG VON FETTSÄUREPRODUKTEN FÜR TIERFUTTER
PROCÉDÉ DE PRÉPARATION DE PRODUITS D'ACIDES GRAS POUR FOURRAGE

(30) Priority: 26.01.2017 EP 17153351
(43) Date of publication of application: 04.12.2019
(73) Proprietor: Bunge Loders Croklaan B.V., 1521 AZ Wormerveer (NL)
(72) Inventor: BHAGGAN, Krishnadath, 1521 AZ Wormerveer (NL); BORGESIUS, Goedhart, 1521 AZ Wormerveer (NL); VERKUIJL, Bastiaan Jeroen Victor, 1521 AZ Wormerveer (NL)
(74) Representative: Potter Clarkson
(86) International application number: PCT/EP2018/050686
(87) International publication number: WO 2018/137938

(56) References cited:
- WO-A1-2013/114381
- WO-A1-93/18667
- US-A1- 2014 303 389
- G. BRUNNER ET AL: "Process design methodology for fractionation of fatty acids from palm fatty acid distillates in countercurrent packed columns with supercritical CO2", THE JOURNAL OF SUPERCRITICAL FLUIDS, vol. 66, 1 June 2012 (2012-06-01), AMSTERDAM, NL, pages 96 - 110, XP055385741, ISSN: 0896-8446, DOI: 10.1016/j.supflu.2012.02.012
- VÉRONIQUE GIBON ET AL: "Future prospects for palm oil refining and modifications", O.C.L. OLEAGINEUX CORPS GRAS LIPIDES., vol. 16, no. 4-5-6, 1 July 2009 (2009-07-01), FR, pages 193 - 200, XP055385578, ISSN: 1258-8210, DOI: 10.1051/ocl.2009.0268

## Description

This invention relates to a process for the preparation of fatty acid products for use in animal feed.

During periods of high milk production, conventional cattle feeds generally do not provide enough energy to cattle. It is known that fat is an excellent source of energy and that increasing the levels of fat in cattle feed results in high yields of milk from cattle. Fat compositions that are rich in long chain saturated free fatty acids, especially palmitic acid (C16:0), are particularly preferred as these compositions significantly increase milk production. Furthermore, compositions high in palmitic acid content have been shown to increase weight gain in goats, sheep and pigs and also increase the quality of such meat, for example by increasing the amount of lean meat content.

However, when the proportion of fat in the diet of cattle exceeds around 5 wt.%, such a feed has a toxic effect on the microorganisms in the rumen of cattle, which severely disrupts their digestive system. This deleterious effect on the digestive system of cattle is particularly true of unsaturated fats.

Fat compositions that are high in palmitic acid content have a melting point which is higher than the temperature in rumen. Therefore, such fat compositions pass through the rumen without interacting with the digestive system. These compositions are often referred to as "protected fats". After by-passing the rumen, the fats then enter the small intestine where the large decrease in pH solubilizes the fats allowing them to be absorbed across the small intestine wall.

Fat compositions which are derived from palm oil, but are low in palmitic acid content, have melting points lower than the temperature of the rumen. Therefore, in order to avoid the deleterious effects of such fats on the digestive system of cattle, the fatty acids in these compositions are typically converted to their corresponding calcium salt, which increases the melting point of fat compositions comprising such fatty acids above the temperature of the rumen. Thus, fat compositions can also be provided as "protected fats" *via* this method.

Through using such "protected fat" compositions in cattle feed, the proportion of fat in the diet of cattle can surpass 5 wt.% without having any adverse effects on the microorganisms within the rumen. Thus, this further increases the benefits of adding fats to animal feed.

US 5,380,893 and US 5,425,963 describe rumen by-pass feeds which are derived from a palm oil distillate. The distillate comprises 20 to 55 wt.% palmitic acid (C16:0), 2 to 50 wt.% oleic acid (18:1), 2 to 20 wt.% linoleic acid (C18:2), 1 to 15 wt.% stearic acid (C18:0) and 0 to 10 wt.% lauric acid (C12:0). Such a distillate which is high in unsaturated fatty acids has a melting point which is lower than the temperature of the rumen. Therefore, in order to render the fats suitable for use as an animal feed, the fatty acids are converted to their calcium salt equivalents, which increases their melting point.

Both of the compositions mentioned above, namely the composition high in palmitic acid which does not require conversion to calcium salts and the composition low in palmitic acid content which does require conversion to calcium salts, are suitable for use in animal feed, particularly as rumen by-pass dietary supplements. The advantage of having a high palmitic acid content in rumen by-pass feeds is the high contribution of this fat to the milk fat production. The advantage of the calcium salt is the cost-effectiveness of the product.

US 2014/303389 A1 describes a process for producing a palm oil substitute enriched in unsaturated fatty acids and palm oil substitutes produced by such a process.

G. Brunner et al. (The Journal Of Supercritical Fluids, vol. 66, 1 June 2012, 96-110) describes the fractionation of fatty acids from palm oil deodorizer distillates (by-products of the physical refining process of palm oil) using a countercurrent packed column with supercritical carbon dioxide as a solvent.

WO 93/18667 describes a dietary fatty acid salt product in granulated form which optionally contains one or more additional nutrient or medicament ingredients and can function as a rumen bypass animal feed supplement.

It has surprisingly been found that prior fractionation of a palm fatty acid distillate (PFAD) provides a stearin solid fraction which is high in palmitic acid content and is suitable for use as a rumen by-pass dietary supplement without any further purification or processing steps. The resulting olein fraction has a fatty acid composition similar to compositions which may be used as a rumen by-pass dietary supplement in its calcium salt form. Therefore, the olein fraction can be further processed to convert the fatty acids therein to their fatty acid alkaline earth metal salt. As such, from one process, two products which are suitable for use as rumen by-pass dietary supplements may be prepared.

According to the invention, there is provided a process for the preparation of fatty acid products for use in animal feed comprising the steps of:
i) providing a palm fatty acid distillate;
ii) fractionating the palm fatty acid distillate to form a first fraction and a second fraction; and
iii) separating the first fraction from the second fraction;
wherein the first fraction comprises palmitic acid (C16:0) in an amount greater than about 60 wt.% and wherein the second fraction comprises palmitic acid (C16:0) in an amount from about 20 wt.% to about 55 wt.%, the percentages being based on the total weight of C12 to C24 fatty acids present in the respective fractions, wherein the process further comprises the step of reacting the second fraction with an alkaline earth metal compound to form a fatty acid alkaline earth metal salt.

The process of the invention provides a fatty acid product, which comprises palmitic acid (C16:0) in an amount greater than about 60 wt.%.

The process of the invention also provides a fatty acid product, which comprises palmitic acid (C16:0) in an amount from about 20 wt.% to about 55 wt.%.

Also described herein is the use of the products obtainable by the process of the invention in an animal feed, preferably as a rumen-bypass dietary supplement.

Also described herein is an animal feed composition comprising the product obtainable by the process of the invention.

Typically, vegetable oils such as palm oil are treated in a stripper to remove the majority of the free fatty acids as a distillate, leaving the less volatile triglycerides behind. Stripping normally takes place in the presence of steam at reduced pressure. The free fatty acids are collected as the volatile fraction from the stripper. This fraction is known as fatty acid distillate (FAD) and fatty acid distillate from palm oil is known as palm fatty acid distillate (PFAD).

The process of the present invention starts with the fractionation of a PFAD starting material. Fractionation can be wet or dry and is preferably dry (i.e., without added solvent). In dry fractionation, the fatty acids with higher melting points, such as palmitic acid (C16:0) are crystallized from the oil in the absence of a solvent and through moderating the temperature of the PFAD, the formation of solids as crystals may be controlled. This crystallized fraction is referred to herein as either the first fraction or as the stearin fraction and these two terms are used interchangeably herein, whereas the resulting liquid fraction is referred to as the second fraction or the olein fraction and these two terms are also used interchangeably herein.

It will be appreciated that the term "crystallized fraction" and related terms used herein refer to the solid obtained in general terms and does not necessarily mean that the solid is fully crystalline. For example, the solid may contain some material that is crystalline and some that is not crystalline. Typically, the solid will contain a mixture of compounds.

The term "fatty acid", as used herein, refers to saturated or unsaturated, straight chain carboxylic acids having from 12 to 24 carbon atoms. Unsaturated fatty acids may comprise one, two, or more double bonds, preferably one or two double bonds. "Free" fatty acids are not bonded to glycerol as part of a glyceride molecule. Levels of fatty acids present in compositions can be determined by methods well-known to those skilled in the art, such as GC-FAME analysis.

Preferably, the PFAD starting material comprises palmitic acid (C16:0) in an amount of from about 30 wt.% to about 60 wt.%, such as in an amount from about 40 wt.% to about 50 wt.%, preferably from about 45 wt.% to about 50 wt.%. Stearic acid (C18:0) may be present in the PFAD starting material in an amount of less than about 10 wt.%, preferably from about 1 wt.% to 5 wt.%. Furthermore, the PFAD starting material may comprise from about 20 wt.% to about 50 wt.% oleic acid (C18:1), such as from about 30 wt.% to about 40 wt.% oleic acid, preferably from about 35 wt.% to about 40 wt.% oleic acid. The PFAD starting material may also comprise less than about 20 wt.% linoleic acid (C18:2), preferably from about 5 wt.% to about 15 wt.% linoleic acid and may furthermore comprise from about 1 wt.% to about 5 wt.% of C₁₂ to C₁₄ fatty acids.

It is preferred that the PFAD starting material, first fraction and/or second fraction have a free fatty acid content, or salts thereof, of greater than about 95 wt.%, such as greater than 96 wt.%, 97 wt.%, 98 wt.% or 99 wt.%. Preferably, essentially all of the fatty acids in the PFAD starting material, first fraction and/or second fraction are free fatty acids.

When using a process of dry fractionation, before the PFAD starting material is dry fractionated, it is provided at a temperature above its melting point, and brought in a liquid state. The temperature at which the PFAD starting material becomes liquid depends on the PFAD chemical composition as well as the pressure under which the PFAD starting material is heated. Typically, the PFAD starting material is heated to a temperature of at least 70°C, which is the melting point of stearic acid at atmospheric pressure.

After heating, the liquid PFAD starting material is cooled resulting in a palmitic acid (C16:0) rich stearin first fraction crystallizing from the olein liquid second fraction. Preferably the PFAD starting material is cooled to a temperature in the range of 20 °C to 60 °C at atmospheric pressure, preferably to a temperature in in the range of 30 °C to 50 °C
The dry fractionation process may be finely controlled by cooling the PFAD starting material at certain rates, optionally according to a predetermined cooling program with different cooling stages.

Once the dry fractionation process is complete, the first stearin fraction is separated from the second olein fraction. Preferably the stearin first fraction is separated from the olein second fraction by filtration, preferably using a membrane press filter. However, any other method known in the art for separating the two fractions may be used, such as centrifugation of the fractionated PFAD starting material followed by decantation of the olein second fraction.

Typically, from about 10 wt.% to about 40 wt.% of the palm fatty acid distillate is separated into the first fraction, more preferably about 20 wt.% to about 30 wt.% of the palm fatty acid distillate is separated as the first fraction. The remainder of the composition remains in the liquid olein second fraction.

The resulting stearin first fraction comprises palmitic acid (C16:0) in an amount greater than about 60 wt.%, such as in an amount from about 70 wt.% to about 90 wt.%, preferably from about 80 wt.% to about 90 wt.%. Stearic acid (C18:0) may be present in the stearin first fraction in an amount of less than about 10 wt.%, preferably from about 1 wt.% to 5 wt.%. Furthermore, the stearin first fraction may comprise less than about 30 wt.% oleic acid (C18:1), such as less than about 25 wt.% oleic acid, for example less than about 20 wt.% oleic acid, preferably from about 5 wt.% to about 15 wt.% oleic acid. This fraction may also comprise less than about 10 wt.% linoleic acid (C18:2), preferably from about 1 wt.% to about 5 wt.% linoleic acid and may furthermore comprise from about 1 wt.% to about 5 wt.% of C₁₂ to C₁₄ fatty acids.

The resulting olein second fraction comprises palmitic acid (C16:0) in an amount from about 20 wt.% to about 55 wt.%, such as in an amount from about 25 wt.% to about 50 wt.%, preferably from about 30 wt.% to about 50 wt.%. Stearic acid (C18:0) may be present in the olein second fraction in an amount of less than about 10 wt.%, preferably from about 1 wt.% to 5 wt.%. Furthermore, the olein second fraction may comprise oleic acid (C18:1) in an amount greater than about 20 wt.%, such as from about 30 wt.% to about 60 wt.%, for example from about 30 wt.% to about 50 wt.% oleic acid. This fraction may also comprise linoleic acid (C18:2) in an amount of from about 5 wt.% to about 20 wt.%, preferably from about 5 wt.% to about 15 wt.% and may furthermore comprise from about 1 wt.% to about 5 wt.% of C₁₂ to C₁₄ fatty acids.

After separation, the olein second fraction is reacted with an edible alkaline earth metal compound to convert the fatty acids of this fraction to fatty acid alkaline earth metal salts. Preferably, before adding the alkaline earth metal compound the olein second fraction
is placed into a high shear mixer. The olein second fraction is then heated above its melting point, preferably to a temperature from about 50°C to about 150°C, such as from about 70°C to about 130°C, for example from about 80°C to about 120°C, preferably from about 80°C to about 100°C before reacting it with the alkaline earth metal compound.

After heating, the alkaline earth metal compound is combined with the olein second fraction, for example by adding the compound to the fraction, preferably in a ratio of olein second fraction to alkaline earth metal compound of about 1 : 0.1 to 0.5, such as about 1 : 0.2 to 0.4, for example about 1 : 0.2 to 0.3, preferably about 1 : 0.2 to 0.25.

Conveniently, the alkaline earth metal compound is a calcium or magnesium compound or a mixture of calcium and magnesium compounds. Advantageously, the alkaline earth metal compound is an alkaline earth metal oxide or an alkaline earth metal hydroxide. Preferably, the alkaline earth metal compound is calcium oxide (CaO) or calcium hydroxide (Ca(OH)₂).

Preferably, the olein second fraction and alkaline earth metal compound mixture is stirred for about 0.5 to about 3 hours at a temperature of from about 50°C to about 150°C, such as from about 70°C to about 130°C, for example from about 80°C to about 120°C, preferably from about 80°C to about 100°C until the reaction is complete, after which the mixture is cooled resulting in the precipitation of the calcium salts of the free fatty acids. Advantageously, the mixture is cooled to a temperature of 30°C.

The resulting alkaline earth metal fatty acid salt product typically has a similar fatty acid composition as detailed above in relation to the olein second fraction, wherein the fatty acids have been converted to their equivalent alkaline earth metal salts. It will be understood that during this reaction the majority, but not all of, the fatty acids in the olein second fraction will be converted to their equivalent salt. For example, ideally greater than 90 wt.% of the fatty acids in the olein second fraction will be converted to their equivalent salt, such as greater than 95 wt.%, for example greater than 96 wt.%, 97 wt.%, 98 wt.% or 99 wt.%. Preferably, essentially all of the fatty acids in the olein second fraction are converted to their equivalent salt.

The process results in two final products, the first being the stearin first fraction and the second being the alkaline earth metal salt of the olein second fraction. Both of these compositions are suitable for use in animal feed as herein described, preferably as a rumen-bypass dietary supplement. Therefore,this process surprisingly provides two fatty acid compositions that are suitable for use in animal feed as herein described, such as a rumen-bypass dietary supplement.

The two products may be pelletized for use as an animal feed as described herein. Preferably, the alkaline earth metal salt of the fatty acids of the second fraction are in granulate form, typically after being pelletized. Alternatively, the two products may be powdered via known processes, such as beading or spray cooling.

The two products may optionally be each provided in the form of a composition that comprises a biologically active ingredient. Preferably, the biologically active ingredient is selected from the group consisting of amino acids, vitamins, minerals, trace elements, enzymes, proteins, non-protein nitrogen compounds, medicaments and mixtures thereof. The compositions may also comprise one or more other conventional carbohydrate-containing components of animal feed as herein described.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise. Percentages of fatty acids are based on the total weight of C₁₂ to C₂₄ fatty acids present.

### EXAMPLES

### Example 1

Two fatty acid products suitable for use in an animal feed were prepared by dry fractionation of a PFAD followed by conversion of the fatty acids of the liquid olein fraction to their calcium salt equivalents.

### Preparation

A PFAD starting material having a free fatty acid content of greater than 95% and a composition as detailed in Table 1 was dry fractionated to provide a solid crystalline stearin fraction and a liquid olein fraction. The solid stearin fraction was separated from the liquid olein fraction by filtration after which, the stearin product was pelletized or powdered without any further purification or chemical modification steps

The olein fraction was then heated to a temperature of around 90°C in a high shear mixer. Calcium hydroxide (Ca(OH)₂) was added to the olein fraction at a ratio of olein to Ca(OH)₂ of about 1:0.23. The mixture was stirred for 0.5 to 3 hours at a temperature of 90°C, after which the mixture was cooled resulting in the precipitation of the calcium salts of the free fatty acids. The product was then pelletized or powdered.

### Analysis

Analytical data is shown in Table 1, along with the details of the PFAD starting material. The fatty acid composition (FAME) of the PFAD starting material and the two resulting products was determined using gas chromatography according to ISO 15304.

**Table 1: Analytical data**

| **Fatty Acid** | **PFAD Starting Material** | **Stearin Fraction Product** | **Calcium Salt of Olein Fraction Product** |
|---|---|---|---|
| C12:0 | <1 | | |
| C14:0 | 2 | | |
| C16:0 | 46 | 81 | 33 |
| C18:0 | 4 | 3 | 5 |
| C18:1 | 37 | 12 | 47 |
| C18:2 | 10 | 3 | 12 |

Both the stearin fraction product and the calcium salt of the olein fraction product were tested separately as a rumen-bypass dietary supplement in animal feed.

The powdered or pelletized form was mixed with commercially available feed compositions in amounts according to regular dietary requirements. Both products were found to give satisfactory results in acting as rumen bypass fat and improved yields of milk from cattle.

The process resulted in two fatty acid products being provided by a single process from a single PFAD starting material, with both of these products being suitable for use in animal feed, particularly as a rumen by-pass dietary supplement.

## Claims

1. A process for the preparation of fatty acid products for use in animal feed comprising the steps of:
i) providing a palm fatty acid distillate;
ii) fractionating the palm fatty acid distillate to form a first fraction and a second fraction; and
iii) separating the first fraction from the second fraction;
wherein the first fraction comprises palmitic acid (C16:0) in an amount greater than about 60 wt.% and wherein the second fraction comprises palmitic acid (C16:0) in an amount from about 20 wt.% to about 55 wt.%, the percentages being based on the total weight of C₁₂ to C₂₄ fatty acids present in the respective fractions, wherein the process further comprises the step of reacting the second fraction with an alkaline earth metal compound to form a fatty acid alkaline earth metal salt.

2. A process according to Claim 1, wherein the alkaline earth metal compound is a calcium or magnesium compound or a mixture thereof.

3. A process according to Claim 2, wherein the alkaline earth metal compound is an alkaline earth metal oxide, an alkaline earth metal hydroxide, or a mixture thereof, preferably calcium oxide (CaO) or calcium hydroxide (Ca(OH)₂).

4. A process according to any preceding claim, wherein the second fraction comprises stearic acid (C18:0), or salts thereof, in an amount of less than about 10 wt.%, preferably from about 1 wt.% to 5 wt.%.

5. A process according to any preceding claim, wherein the second fraction comprises palmitic acid (C16:0), or salts thereof, in an amount from about 25 wt.% to about 50 wt.%, preferably from about 30 wt.% to about 50 wt.%, and/or the second fraction comprises oleic acid (C18: 1), or salts thereof, in an amount greater than about 20 wt.%, such as from about 30 wt.% to about 60 wt.%, for example from about 30 wt.% to about 50 wt.%.

6. A process according to any preceding claim, wherein the second fraction comprises linoleic acid (C18:2), or salts thereof, in an amount of from about 5 wt.% to about 20 wt.%, preferably from about 5 wt.% to 15 wt.%, and/or the second fraction comprises from about 1 wt.% to about 5 wt.% of C₁₂ to C₁₄ fatty acids, or salts thereof.

7. A process according to any preceding claim, wherein the first fraction comprises palmitic acid (C16:0) in an amount from about 70 wt.% to about 90 wt.%, preferably from about 80 wt.% to about 90 wt.%.

8. A process according to any preceding claim, wherein the first fraction comprises stearic acid (C18:0) in an amount of less than about 10 wt.%, preferably from about 1 wt.% to 5 wt.%.

9. A process according to any preceding claim, wherein the first fraction comprises less than about 30 wt.% oleic acid (C18:1), such as less than about 25 wt.% oleic acid, for example less than about 20 wt.% oleic acid, preferably from about 5 wt.% to about 15 wt.% oleic acid, and/or the first fraction comprises less than about 10 wt.% linoleic acid (C18:2), preferably from about 1 wt.% to about 5 wt.% linoleic acid.

10. A process according to any preceding claim, wherein greater than about 95 wt.% of the fatty acids in the palm fatty acid distillate, first fraction or second fraction are free fatty acids, or salts thereof.

11. A process according to any preceding claim, wherein the first fraction represents from about 10 wt.% to about 40 wt.% of the palm fatty acid distillate, preferably from about 20 wt.% to about 30 wt.% of the palm fatty acid distillate.

12. A process according to any preceding claim, wherein the first and/or second fraction is pelletized or powdered.

## Patentansprüche

1. Prozess zur Herstellung von Fettsäureprodukten zur Verwendung in Tierfutter, umfassend die folgenden Schritte:
i) Bereitstellen eines Palmfettsäuredestillats;
ii) Fraktionieren des Palmfettsäuredestillats zur Bildung einer ersten Fraktion und einer zweiten Fraktion; und
iii) Trennen der ersten Fraktion von der zweiten Fraktion;
wobei die erste Fraktion Palmitinsäure (C16:0) in einer Menge von mehr als etwa 60 Gew.-% umfasst und wobei die zweite Fraktion Palmitinsäure (C16:0) in einer Menge von etwa 20 Gew.-% bis etwa 55 Gew.-% umfasst, wobei die Prozentsätze auf dem Gesamtgewicht der in den jeweiligen Fraktionen vorhandenen C₁₂- bis C₂₄-Fettsäuren basieren, wobei das Verfahren ferner den Schritt der Umsetzung der zweiten Fraktion mit einer Erdalkalimetallverbindung zur Bildung eines Fettsäureerdalkalimetallsalzes umfasst.

2. Prozess nach Anspruch 1, wobei die Erdalkalimetallverbindung eine Calcium- oder Magnesiumverbindung oder eine Mischung davon ist.

3. Prozess nach Anspruch 2, wobei die Erdalkalimetallverbindung ein Erdalkalimetalloxid, ein Erdalkalimetallhydroxid oder eine Mischung davon, vorzugsweise Calciumoxid (CaO) oder Calciumhydroxid (Ca(OH)₂) ist.

4. Prozess nach einem der vorstehenden Ansprüche, wobei die zweite Fraktion Stearinsäure (C18:0) oder deren Salze in einer Menge von weniger als etwa 10 Gew.-%, vorzugsweise von etwa 1 Gew.-% bis 5 Gew.-%, umfasst.

5. Prozess nach einem der vorstehenden Ansprüche, wobei die zweite Fraktion Palmitinsäure (C16:0) oder deren Salze in einer Menge von etwa 25 Gew.-% bis etwa 50 Gew.- %, vorzugsweise von etwa 30 Gew.-% bis etwa 50 Gew.-% umfasst %, und/oder die zweite Fraktion Ölsäure (C18:1) oder deren Salze in einer Menge von mehr als etwa 20 Gew.-%, wie etwa 30 Gew.-% bis etwa 60 Gew.-%, zum Beispiel von etwa 30 Gew.-% bis etwa 50 Gew.-%, umfasst.

6. Prozess nach einem der vorstehenden Ansprüche, wobei die zweite Fraktion Linolsäure (C18:2) oder Salze davon in einer Menge von etwa 5 Gew.-% bis etwa 20 Gew.-%, vorzugsweise von etwa 5 Gew.-% bis 15 Gew.-%, umfasst und/oder die zweite Fraktion etwa 1 Gew.-% bis etwa 5 Gew.-% C₁₂- bis C₁₄-Fettsäuren oder Salze davon umfasst.

7. Prozess nach einem der vorstehenden Ansprüche, wobei die erste Fraktion Palmitinsäure (C16:0) in einer Menge von etwa 70 Gew.-% bis etwa 90 Gew.-%, vorzugsweise von etwa 80 Gew.-% bis etwa 90 Gew.-% umfasst.

8. Prozess nach einem der vorstehenden Ansprüche, wobei die erste Fraktion Stearinsäure (C18:0) in einer Menge von weniger als etwa 10 Gew.-%, vorzugsweise von etwa 1 Gew.-% bis 5 Gew.-%, umfasst.

9. Prozess nach einem der vorstehenden Ansprüche, wobei die erste Fraktion weniger als etwa 30 Gew.-% Ölsäure (C18:1), wie etwa weniger als etwa 25 Gew.-% Ölsäure, beispielsweise weniger als etwa 20 Gew.-% Ölsäure, vorzugsweise etwa 5 Gew.-% bis etwa 15 Gew.-% Ölsäure, umfasst und/oder die erste Fraktion weniger als etwa 10 Gew.-% Linolsäure (C18:2), vorzugsweise etwa 1 Gew.-% bis etwa 5 Gew.-% Linolsäure, umfasst.

10. Prozess nach einem der vorstehenden Ansprüche, wobei mehr als etwa 95 Gew.-% der Fettsäuren in dem Palmfettsäuredestillat, der ersten Fraktion oder der zweiten Fraktion freie Fettsäuren oder Salze davon sind.

11. Prozess nach einem der vorstehenden Ansprüche, wobei die erste Fraktion etwa 10 Gew.-% bis etwa 40 Gew.-% des Palmfettsäuredestillats, vorzugsweise etwa 20 Gew.-% bis etwa 30 Gew.-% des Palmfettsäuredestillats, darstellt.

12. Prozess nach einem der vorstehenden Ansprüche, wobei die erste und/oder zweite Fraktion pelletiert oder pulverisiert wird.

## Revendications

1. Procédé de préparation de produits d'acides gras destinés à être utilisés pour le fourragqe, comprenant les étapes suivantes :
i) la fourniture d'un distillat d'acide gras de palme ;
ii) le fractionnement du distillat d'acide gras de palme pour former une première fraction et une seconde fraction ; et
iii) la séparation de la première fraction de la seconde fraction ;
dans lequel la première fraction comprend de l'acide palmitique (C16:0) en une quantité supérieure à environ 60 % en poids et dans lequel la seconde fraction comprend de l'acide palmitique (C16:0) en une quantité d'environ 20 % en poids à environ 55 % en poids, les pourcentages étant basés sur le poids total des acides gras en C₁₂ à C₂₄ présents dans les fractions respectives, dans lequel le procédé comprend en outre l'étape de réaction de la seconde fraction avec un composé de métal alcalino-terreux pour former un sel de métal alcalino-terreux d'acide gras.

2. Procédé selon la revendication 1, dans lequel le composé de métal alcalino-terreux est un composé de calcium ou de magnésium ou un mélange de ceux-ci.

3. Procédé selon la revendication 2, dans lequel le composé de métal alcalino-terreux est un oxyde de métal alcalino-terreux, un hydroxyde de métal alcalino-terreux ou un mélange de ceux-ci, de préférence l'oxyde de calcium (CaO) ou l'hydroxyde de calcium (Ca(OH)₂).

4. Procédé selon une quelconque revendication précédente, dans lequel la seconde fraction comprend de l'acide stéarique (C18:0), ou des sels de celui-ci, en une quantité inférieure à environ 10 % en poids, de préférence d'environ 1 % en poids à 5 % en poids.

5. Procédé selon une quelconque revendication précédente, dans lequel la seconde fraction comprend de l'acide palmitique (C16:0), ou des sels de celui-ci, en une quantité d'environ 25 % en poids à environ 50 % en poids, de préférence d'environ 30 % en poids à environ 50 % en poids, et/ou la seconde fraction comprend de l'acide oléique (C18:1), ou des sels de celui-ci, en une quantité supérieure à environ 20 % en poids, tel que d'environ 30 % en poids à environ 60 % en poids, par exemple d'environ 30 % en poids à environ 50 % en poids.

6. Procédé selon une quelconque revendication précédente, dans lequel la seconde fraction comprend de l'acide linoléique (C18:2), ou des sels de celui-ci, en une quantité d'environ 5 % en poids à environ 20 % en poids, de préférence d'environ 5 % en poids à 15 % en poids, et/ou la seconde fraction comprend d'environ 1 % en poids à environ 5 % en poids d'acides gras en C₁₂ à C₁₄ ou des sels de ceux-ci.

7. Procédé selon une quelconque revendication précédente, dans lequel la première fraction comprend de l'acide palmitique (C16:0) en une quantité d'environ 70 % en poids à environ 90 % en poids, de préférence d'environ 80 % en poids à environ 90 % en poids.

8. Procédé selon une quelconque revendication précédente, dans lequel la première fraction comprend de l'acide stéarique (C18:0) en une quantité inférieure à environ 10 % en poids, de préférence d'environ 1 % en poids à 5 % en poids.

9. Procédé selon une quelconque revendication précédente, dans lequel la première fraction comprend moins d'environ 30 % en poids d'acide oléique (C18:1), tel que moins d'environ 25 % en poids d'acide oléique, par exemple moins d'environ 20 % en poids d'acide oléique, de préférence d'environ 5 % en poids à environ 15 % en poids d'acide oléique, et/ou la première fraction comprend moins d'environ 10 % en poids d'acide linoléique (C18:2), de préférence d'environ 1 % en poids à environ 5 % en poids d'acide linoléique.

10. Procédé selon une quelconque revendication précédente, dans lequel plus d'environ 95 % en poids des acides gras dans le distillat d'acide gras de palme, de la première fraction ou de la seconde fraction, sont des acides gras libres ou des sels de ceux-ci.

11. Procédé selon une quelconque revendication précédente, dans lequel la première fraction représente d'environ 10 % en poids à environ 40 % en poids du distillat d'acide gras de palme, de préférence d'environ 20 % en poids à environ 30 % en poids du distillat d'acide gras de palme.

12. Procédé selon une quelconque revendication précédente, dans lequel la première et/ou la seconde fraction sont granulées ou réduites en poudre.
